(19)

Europäisches
Patentamt
European
Patent Office
Office européen
des brevets

(11) **EP 2 608 465 A1**

(12) **EUROPEAN PATENT APPLICATION**

(43) Date of publication:
**26.06.2013 Bulletin 2013/26**

(51) Int Cl.:
***H04L 12/70*** *(2013.01)*

(21) Application number: **11306674.0**

(22) Date of filing: **15.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent
75007 Paris (FR)**

(72) Inventors:
• **Derakhshan, Fariborz
90491 Nürnberg (DE)**

• **Grob-Lipski, Heidrun
72181 Starzach (DE)**
• **Schefczik, Peter
91056 Erlangen (DE)**
• **Soellner, Michael
91058 Erlangen (DE)**
• **Roessler, Horst
70794 Filderstadt (DE)**

(74) Representative: **D'Halleweyn, Nele Veerle Trees Gertrudis
Arnold & Siedsma
Sweelinckplein 1
2517 GK Den Haag (NL)**

(54) **Path computation entity and method for computing a path**

(57)  Path computation entity for selecting a path amongst a plurality of paths, comprising: a preparation component adapted for obtaining the plurality of paths, with for each path thereof at least a first and a second value of a first and a second optimization parameter qualifying a first and second property of the path; a first determining component adapted for determining a first set of paths of said plurality of paths, such that each path of said first set has for the first optimization parameter a first value satisfying a first optimization objective; a second determining component adapted for determining a second set of paths of said first set of paths, such that each path of said second set has for the second optimization parameter a second value satisfying a second optimization objective; and a selector adapted for selecting a path from said second set of paths.

FIG. 1

EP 2 608 465 A1

**Description**

<u>Field of the invention</u>

The present invention relates to a path computation entity and to a method for computing a path.

<u>State of the art</u>

Traditionally deployed path computation algorithms like Dijkstra's algorithm produce the shortest path along nonnegative edge path costs. Dijkstra's algorithm is often used in routing and as a subroutine within other algorithms.

<u>Summary</u>

The object of the invention is to provide a path computation entity and method allowing a more efficient, dynamic and scalable path computing.
An embodiment of the invention relates to a path computation entity for computing a preferred path amongst a plurality of available paths between a first and a second network node. The path computation entity comprises a preparation element adapted for obtaining the plurality of paths, with for each path thereof at least a first and a second value of a first and a second optimization parameter qualifying a first and second property of the path; a first determining element adapted for determining a first set of paths of said plurality of paths, such that each path of said first set has for the first optimization parameter a first value satisfying a first optimization objective; a second determining element adapted for determining a second set of paths of said first set of paths, such that each path of said second set has for the second optimization parameter a second value satisfying a second optimization objective; and a selector adapted for selecting a path from said second set of paths.
Such an embodiment has the advantage that complex and long optimization cycles are avoided and that the scalability is improved. By improving the computed path solution iteratively, depending on the available time for the computing, a near-optimal solution, a Pareto-optimum or a global optimum may be reached.
The functions of the various elements or components mentioned in the present specification may be provided through the use of dedicated hardware as well as hardware capable of executing software in association with appropriate software. When provided by a processor, the functions may be provided by a single dedicated processor, by a single shared processor, or by a plurality of individual processors, some of which may be shared.
Also the skilled person will understand that embodiments of the invention may be implemented for more than two optimization parameters and optimization objectives, wherein further determining components are provided.
According to a preferred embodiment the path computation entity further comprises a quantizing element adapted for obtaining said first and/or second values through quantizing of original first and second values of respectively the first and second optimization parameter for each path of said plurality of paths in discrete bands having a quantization parameter, e.g. an interval width. By quantizing the range of the optimization parameters according to predefined configuration settings, the computing effort can be further reduced.
According to a preferred embodiment the first determining element is further adapted for, if the determining of the first set of paths results in the number of paths of the first set of paths being lower than a first threshold or higher than a second threshold, changing the quantization parameter, e.g. respectively increasing or decreasing the interval width, obtaining new first quantized values using the changed quantization parameter, and determining a new first set of paths, each path of said new first set having a new first quantized value satisfying the first optimization objective. The second determining element may then be further adapted for determining the second set of paths using the new first set. Such a refining/broadening of the optimization field further improves the computation efficiency and the convergence to a solution.
According to a preferred embodiment the second determining element is further adapted for, if the determining of the second set of paths results in the number of paths of the second set of paths being lower than a first threshold or higher than a second threshold, changing the quantization parameter, e.g. respectively increasing or decreasing the interval width, obtaining new second quantized values using the changed quantization parameter, and determining a new second set of paths, each path of said new second set having a new second quantized value satisfying the first optimization objective.
According to a preferred embodiment the preparation element is further adapted for receiving for each path of said plurality of paths, values of at least two optimization parameters qualifying at least two properties of a path, and at least two weight values for said at least two optimization parameters; and for defining the optimization parameter having the highest weight value as the first optimization parameter, and the optimization parameter having the second highest weight value as the second optimization parameter. By using weight values the computation efficiency can be further improved giving priority to optimization parameters having a higher weight value. The second determining element is then preferably further adapted to take into account the difference between the weight value of the first and the second optimization parameter when determining the second set of paths.

According to an exemplary embodiment the first and/or second optimization parameter qualifies any one of the following properties: throughput of the path, distance of the path, time needed for sending data along the path, cost for sending data along the path.

According to a preferred embodiment the path computation entity further comprises means for determining a measure for the processing load of the path computation entity. The second determining element may then be further adapted to take into account this measure. In that way, in case of a high load the iterative computation may be interrupted to proceed with the selecting of a near-optimum solution, whilst in case of a low load the computation may be refined to obtain a global optimum.

According to another embodiment of the invention there is provided a method for computing a preferred path amongst a plurality of available paths between a first and a second network node. The method comprises

- obtaining the plurality of paths, with for each path thereof at least a first and second value for a first and a second optimization parameter qualifying a first and second property of a path;
- finding a first set of paths of said plurality of paths, each path of said first set having for the first optimization parameter a first value satisfying a first optimization objective;
- finding a second set of paths of said first set of paths, each path of said second set having for the second optimization parameter a second value satisfying a second optimization objective; and
- selecting a path from said second set of paths.

According to a preferred embodiment the first and/or second values are obtained by quantizing original first and second values of respectively the first and second optimization parameter for each path of said plurality of paths in discrete bands using a quantization parameter, e.g. a predefined interval width. If the finding of the first set of paths results in the number of paths of the first set of paths being lower than a first threshold or higher than a second threshold, the quantization parameter is altered, e.g. the interval width is respectively increased or decreased, a plurality of new first quantized values is obtained using the altered quantization parameter, and a new first set of paths is found, each path of said new first set having a new first quantized value satisfying said first optimization objective. The steps of obtaining a set of second quantized values and of finding a second set of paths are then performed using the new first set.

According to a preferred embodiment the method further comprises obtaining for each path of the plurality of paths, values for at least two optimization parameters qualifying at least two properties of a path; and at least two weight values for said at least two optimization parameters; and selecting the optimization parameter having the highest weight value as the first optimization parameter; and the optimization parameter having the second highest weight value as the second optimization parameter.

According to a further embodiment there is provided a method for dealing with requests for obtaining a path between a first and a second network node, comprising:

- receiving a first request for obtaining a path between a first and a second network node;
- obtaining a plurality of paths between the first and the second network node, and for each path at least a first and second value for a first and a second optimization parameter;
- computing a first set of paths amongst said plurality of paths using said first values and computing a second set of paths amongst said first set of paths using said second optimization parameter;
- selecting a path from said second set of paths; and
- storing the selected path in a traffic engineering database.

Preferably such an embodiment of the method further comprises determining a measure for the processing load of the path computation entity, wherein, after finding the first set of paths, said measure is used to determine whether or not to perform the steps of finding a second set of paths and of selecting a path from said second set of paths, wherein, if said steps are not performed, the path is selected from the first set of paths.

A person of skill in the art would readily recognize that steps of various above described methods can be performed by programmed computers. Herein, some embodiments are also intended to cover program storage devices, e.g., digital data storage media, which are machine or computer readable and encode machine executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

According to embodiments of the invention an optimization method is provided to select paths across multiple subsystems based on multiple criteria. The method can work in a distributed hierarchical system, where the objective function can operate locally and autonomously in the subsystems as well as globally across multiple domains. The optimum path is preferably calculated iteratively by stepwise considering multiple criteria. The algorithm is preferably adapted dynamically to the network state. An advantage of such an embodiment is its fractal property that allows it to be used at diverse levels of the network hierarchy by maintaining its scalability through abstracting at each layer of the management hierarchy from the data of the lower layers.

Embodiments of the path computation entity and method of the invention are in particular advantageous for being used in the control unit and method disclosed in EP 11305107.2 in the name of the applicant which is incorporated herein by reference.

Brief description of the figures

The accompanying drawings are used to illustrate presently preferred non-limiting exemplary embodiments of the present invention. The above and other advantages features and objects of the invention will become more apparent and the invention will be better understood from the following detailed description when read in conjunction with accompanying drawings in which:

- Figure 1 is a flow chart illustrating an embodiment of the method of the invention;
- Figure 2 is a flow chart illustrating a detailed exemplary embodiment of an $i^{th}$ step of the method of figure 1;
- Figure 3 illustrates a system comprising a plurality of path computing entities according to an embodiment of the invention;
- Figure 4 illustrates en embodiment of the quantizing of the optimization parameters;

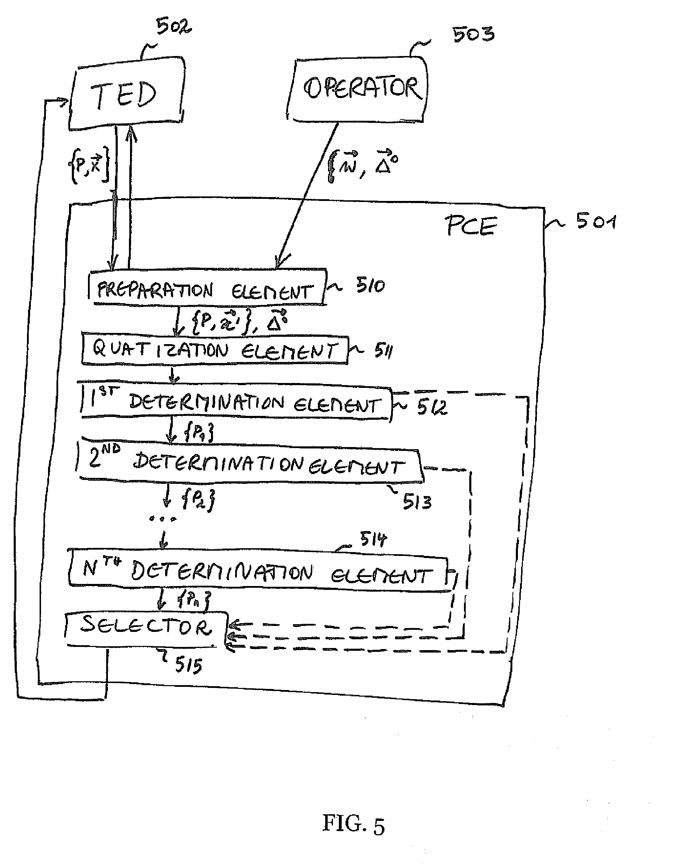

- Figure 5 an embodiment of a PCU according to the invention.

One of the objects of the invention is to define efficient multi-criteria intra-domain and inter-domain path computation for modern network environments such as Data Center environments and Cloud RAN environments. The Path Computation Entity (PCE) represents a modern vision of networks where route computations should more or less be separated from actual packet forwarding. The aim of the invented iterative multi-criteria path computation algorithm is to find the optimum path under different path computation stress conditions with regard to the weighted parameters as defined by the user, operator and/or network.

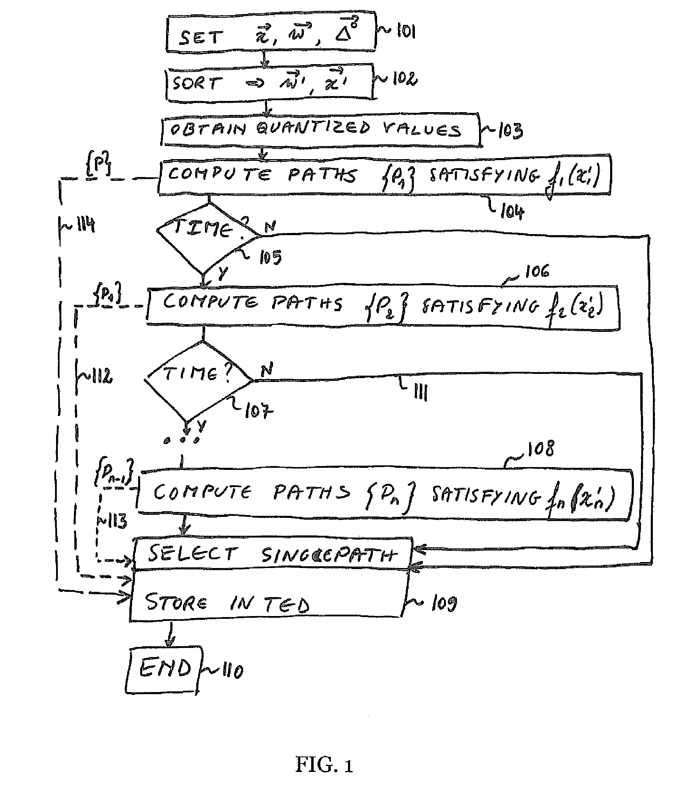

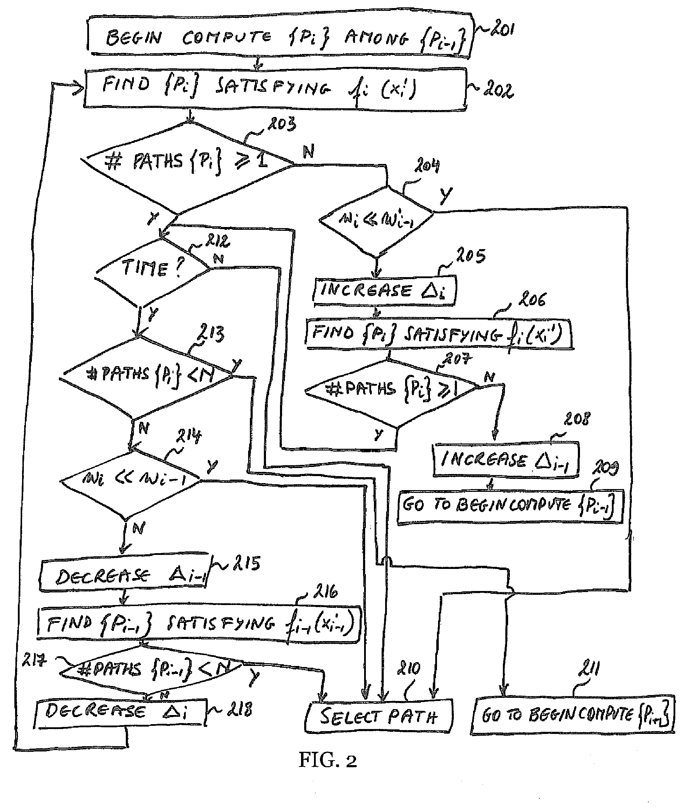

Now an embodiment of the method of the invention will be described with reference to figures 1 and 2. The illustrated embodiment uses the following definitions for the input parameters:

Optimization parameters:  $\vec{x}$

Priorities (weights):  $\vec{w}$

Default quantization width:  $\vec{\Delta^0}$

Multiplier for dynamical adaptation of the quantization band width: $\tau$

Optimization objectives:  $\vec{f}(\vec{x})$

and for the output parameter:

path $P_n$ satisfying the optimization objectives of n optimization parameters $(x_1, x_2, .., x_n)$

First the operator defines a set of n parameters of the optimization space:

$$\vec{x} = (x_1, x_2, \ldots, x_n)$$

According to an exemplary embodiment $x_1$ = throughput; $x_2$ = cost; $x_3$ = distance; $x_4$ = delay; etc.

Each parameter is assigned with a weight, referring to e.g. an importance degree or priority, defined by the operator and/or by the user:

$$\vec{w} = (w_1, w_2, \ldots, w_n)$$

with $w_i \in \mathbb{Q} : 0 \leq w_i \leq 1$. The weight plays the role of an iteration index to decide to exit an optimization cycle or start a new iteration. According to an exemplary embodiment the operator, the user or both define(s) the importance of the parameter "throughput" as 80% and that of the parameter "cost" as 70%, and that of the parameter "delay" as 20% for the performance of the network according to own policies.

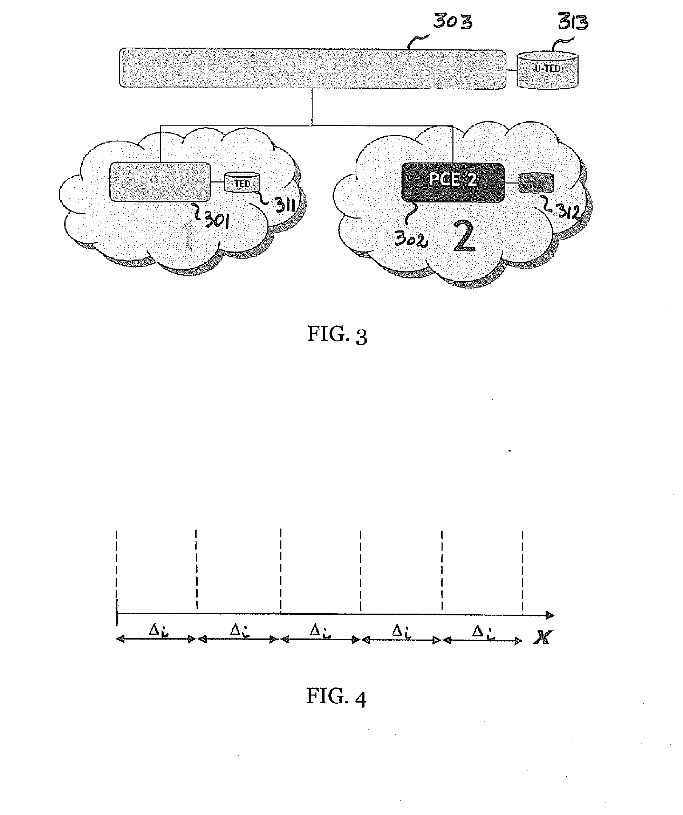

Each optimization parameter $x_i$ is quantized in discrete bands (intervals) with a default (depicted by the superscript index 0) width defined by the operator, see also figure 4:

$$\overrightarrow{\Delta^0} = (\Delta_1^0, \Delta_2^0, \ldots, \Delta_n^0)$$

The widths $\Delta_i^0$ have the same unit as their corresponding $x_i$. The introduction of these discretization bands has the advantage that qualitative demands like quality, confidentiality, trustfulness, etc. are quantified, that optimization effort is decreased and that unnecessary operation cycles due to negligible variances with negligible impacts on the result can be avoided. According to an exemplary embodiment the bandwidth $x_1$ can be divided in 2 Mbps bands. Thus, throughputs in the range 2 Mbps < t < 4 Mbps can be treated equally.

Each default interval width can be decreased or increased elastically and independently by the operator to increase or decrease the optimization granularity.

$$\Delta_i = \tau_i \Delta_i^0$$

with $\tau_i \in \mathbb{Q}$ a multiplicative factor. According to an exemplary embodiment the default interval width of throughput of 2 Mbps can be doubled or halved, giving new interval width of 4 Mbps or 1 Mbps.

Given the priority list $\vec{w}$ and a sort function $f_{\vec{w}}(\vec{w}) : \vec{w} \rightarrow \vec{w}'$ operating on the original weight list the algorithm produces an ordered list of the weights of the optimization parameters:

$$\vec{w}' = (w_1', w_2', \ldots, w_n')$$

with

$$w_1' \geq w_2' \geq w_n'.$$

Given the optimization parameter list $\vec{x}$ and the ordered weight list $\vec{w}$ and a sort function $f_{\vec{w}'}(\vec{x}) : \vec{x} \rightarrow \vec{x}'$ operating on the original parameter list, the algorithm compiles an ordered list of parameters with regard to their corresponding weights:

$$\vec{x}' = (x_1', x_2', \ldots, x_n')$$

In step 101 an operator and/or user sets the optimization parameters, the weights and the interval widths. In step 102 the input parameters are sorted according to their weight values, starting with parameter having the highest weight values. In step 103 the values of the optimization parameters $\vec{x}'$ are obtained for each path of a plurality of paths between a first node and a second node, and those values are quantized.

In step 104 the algorithm computes a set of paths $\{P_1\}$ satisfying the first optimization objective $f_1(\vec{x}_1')$ with regard to the first parameter in the ordered parameter list having the highest importance in the set. The objective can be for example minimum or maximum. According to an exemplary embodiment the algorithm finds the paths with maximum throughput. The optimization objective can also be a constraint, e.g. paths should be found with a throughput larger than 5 Mbps.

In step 105 it is checked whether the inter-arrival time between subsequent requests for the computation of a path is above a predetermined threshold value. If this is not the case then the algorithm proceeds with the selection of a path amongst the first set of paths $\{P_1\}$, see step 109. Otherwise, the algorithm proceeds to step 106 and computes among the obtained set of paths $\{P_1\}$ those satisfying the optimization objective concerning the next parameter in the ordered parameter list, that is $f_2(\vec{x}_2')$, resulting in a second set of paths $\{P_2\}$.

This algorithm continues until either the end of the optimization parameter list is reached with the resulting set $\{P_n\}$, see step 108, or the optimization loop is exited due to a condition, see arrows 111, 112, 113, 114.

In step 109 the algorithm selects out of the obtained end-set $\{Pn\}$ one single path $P_n$, e.g. either randomly when there are multiple equal paths in the end-set, or deterministically when there is only one path in the end-set. The single path $P_n$ can now be submitted to the requesting instance and stored in the traffic engineering database (TED).

In certain cases it may desirable to interrupt the computation of the paths in any of the steps 104, 106, 108, in which case the method immediately proceeds to the selection step 110, see the dashed lines 112, 113, 114 in figure 1.

Now an embodiment for computing of a set of paths $\{P_i\}$ amongst a set of paths $\{P_{i-1}\}$ will be set out in detail with reference to figure 2.

If in steps 202 and 203 no path can be found among the already obtained solutions from the previous optimization cycle, that is among the set $\{P_{i-1}\}$ concerning the parameter $x'_{i-1}$, that can meet the current optimization requirement with regard to the current parameter $x'_i$ in the ordered parameter set, then the optimization algorithm differs between two cases, see steps 204:

- If the weight $w'_i$ of the current parameter $x'_i$ is negligible with respect to the weight $w'_{i-1}$ of the previous optimization parameter $x'_{i-1}$, that is $w'_i << w'_{i-1}$, then the optimization loop is exited and the algorithm goes to step 210 with the available set $\{P_{i-1}\}$ without starting any new processing cycle. The aim of this strategy is that in this case the *i*-th parameter has such a low importance that it cannot justify the efforts of a new optimization cycle.
- However if the weight $w'_i$ is not negligible with respect to $w'_{i-1}$, that is $w'_i \approx w'_{i-1}$, then the algorithm proceeds in the following way. It increases the interval width of the current less important parameter $x_i$, see step 205, to relax the constraint and thus increase the probability of getting a hit (an appropriate path in the set $\{P_{i-1}\}$) in step 206. If this fails, see steps 207 and 208, then the algorithm increases the interval width of the more important parameter $x_{i-1}$ and computes a new set $\{P_{i-1}\}$ satisfying the previous optimization constraint, see step 209. With this new set it continues the optimization procedure. If this also fails, the algorithm may further increase the interval width of the parameter $x'_{i-1}$ and/or $x'_i$ and continue with the optimization procedure. The algorithm continues with this process until the predefined thresholds of tolerance are reached. It first decreases the granularity of the less important parameter, and then - if necessary - that of the more important parameters.

If in steps 202 and 203 at least one path can be found among the set $\{P_{i-1}\}$, see step 203, then the procedure continues with step 212 where it is verified that the inter-arrival time between subsequent requests is not too low. If the requests arrive too fast then, the algorithm proceeds to step 210 to select a path. If the algorithm finds too many equivalent paths satisfying the optimization objectives in the end-set of the optimization process, see step 213 it can - if there is enough time - proceed as follows. If the weight $w'_i$ is negligible with respect to $w'_{i-1}$, see step 214, that is $w'_i \ll w'_{i-1}$, then the optimization iteration loop is exited and the algorithm goes to step 210. However if the weight $w'_i$ is not negligible with respect to $w'_{i-1}$, that is $w'_i \approx w'_{i-1}$, then the algorithm proceeds with step 215. It decreases the interval width $\Delta_{i-1}$, of the more important parameter $x'_{i-1}$ to find a set of fewer but better paths $\{Pi_1\}$, see step 216. If there are still multiple paths, see step 217, then the algorithm decreases the tolerance band $\Delta_i$ of the less important parameter $x'_i$, see step 218, to reduce the redundancy by more exact selection criteria. If still there are still too many paths satisfying the new constraints, the algorithm may again decrease one or both tolerance bands by reiterating steps 212-218.

The skilled person will understand that the example of figure 2 is merely an embodiment and that the exact implementation of the method may differ. E.g. instead of decreasing $\Delta_{i-1}$ in step 215 and 216, it may also be decided to decrease $\Delta_1$ and to recalculate $\{P_1\}$. Further the step of deciding whether or not to interrupt the further computing based on the measure of the processing load (steps 105, 107, 212) could be done at more or less points in algorithm.

The path computation request inter-arrival time is a parameter that affects the iteration cycles of the optimization.

It depicts a measure for the processing load. The default value of it is typically determined by the network operator on the basis of its own experiences and policies and with regard to the trade-off between optimization quality and performance delay. It can be adapted to the network state dynamically during run-time via for example monitoring it in a sliding time window.

The default width of the quantization intervals may be determined by the network operator on basis of its own experiences and policies and with regard to the trade-off between optimization granularity and performance cost. These widths may be dynamically set by the algorithm in the run-time to respond adequately to the changes of the environment and demands. The scale by which two parameters can be regarded as roughly equal (whether or not the condition $w_i << w_{i-1}$ is fulfilled) may also be defined by the network operator on basis of its own experiences and policies and with regard to the trade-off between optimization granularity and performance cost. These scales can also be set dynamically by the algorithm in the run-time to respond adequately to the changes of the environment and demands.

The tolerance thresholds limit the scope of the interval width multipliers $\tau$. They may be either defined by the operator or limited automatically by the range of their corresponding optimization parameter. This is best illustrated with an example: assume that the bandwidth is 20 Mbps. It is divided per default into 2-Mbps quantization intervals. This width can be changed dynamically for a better or worse precision of selection by means of the multiplier $\tau$. Now, in increasing the interval width, it is obvious that the resulting width after multiplication with the multiplier cannot be wider than the entire throughput band. On the opposite, in decreasing the interval width, the resulting width after multiplication with the multiplier $\tau_i$ cannot be less than the minimum transmission band for the service, e.g. 12.2 kbps for a call.

Further various policies may be defined by the operator for initiating path recomputation. According to a possible embodiment a path recomputation may be initiated on the basis of a timestamp of a precalculated path. The PCE may e.g. verify if a path stored in the TED has a timestamp which is "old", and if this is the case start a recomputation of the path. According to another approach the PCE may monitor the difference between a requested value for an optimization parameter and a stored value in the TED for a particular path, and initiate recomputation if this difference exceeds a predetermined threshold value. Yet another approach is to couple the recomputation to the feedback from the requester, and e.g. start recomputation if a requester has rejected a previously offered path.

**Example**

In this simple scenario we describe the main ideas of the algorithm introduced above. For the sake of simplicity we assume 3 optimization parameters with decreasing importance: $x_1, x_2, x_3$ with corresponding priorities (weight values: 80%, 70%, 20%), see Table 1 below

Table 1: Paths, parameters, weights

| | $x_1$ (e.g. data rate in Mbps) weight: 80% $f_1$= maximize | $x_2$ (e.g. costs in units) weight: 70% $f_2$= minimize | $x_3$ (e.g. delay in units) weight: 20% $f_3$= minimize |
|---|---|---|---|
| **Path 1** | 3 | 20 | 2 |
| **Path 2** | 10 | 40 | 3 |
| **Path 3** | 7 | 30 | 1 |
| **Path 4** | 4 | 10 | 4 |
| **Path 5** | 10 | 30 | 2 |
| **Path 6** | 6 | 60 | 3 |
| **Path 7** | 7 | 50 | 5 |
| **Path 8** | 10 | 70 | 7 |
| **Path 9** | 9 | 30 | 1 |

Predefined default intervals are assumed: $\vec{\Delta}$ = (2, 20, 2). When starting the algorithm:

$x_1$ is divided into 2-Mbps bands:

I = (0,2]; II = (2,4]; III = (4,6]; IV = (6,8]; V = (8,10].
$x_2$ is divided into 20-units bands: I=(0,20], II=(20,40], III=(40,60], IV=(60,80].
$x_3$ is divided into 2-units bands:

I=(0,2], II=(2,4], III=(4,6], IV=(6,8].

Thus, regarding the quantized values for the optimization parameters, the matrix looks like Table 2 below.

Table 2: Paths, parameters and weights, after quantization process

|  | $x_1$ | $x_2$ | $x_3$ |
|---|---|---|---|
| **Path 1** | I | I | I |
| **Path 2** | **V** | **II** | II |
| **Path 3** | IV | II | I |
| **Path 4** | III | I | II |
| **Path 5** | **V** | **II** | **I** |
| **Path 6** | III | III | II |
| **Path 7** | IV | III | III |
| **Path 8** | **V** | IV | IV |
| **Path 9** | **V** | **II** | **I** |

In a first step the best paths regarding the most important quantized parameter x1 are determined: Paths 2, 5, 8, 9 all belong to the top category V. If the inter-arrival times of request are long enough we try to find an optimum solution among these 4 paths concerning the next parameter x2. With regard to x2 we find among the above 4 obtained paths 2, 5, 8, 9 the best paths: Path 2, 5, 9 belonging to category II. If the inter-arrival times of request are long enough we try to find an optimum solution among these 3 paths concerning the next parameter $x3$. With regard to $x3$ we find among the 3 obtained paths above the best path: Path 5, 9 both belonging to category I.

As we get 2 paths, if the inter-arrival times of requests are long enough, we can try to differentiate between these 2 paths by a finer observation of the most important parameter $x1$. Thus we decrease the quantization interval (increase the precision) of $x_1$ from 2 to 1 and get for these 2 paths 2 different values: Path 5 maps onto a higher level of the category V concerning $x_1$, call it Va, whereas path 9 maps onto the lower level of the category V, call it Vb. Note that with respect to $x_3$ path 9 is better than path 5, however the priority of $x_3$ can be neglected compared to $x_1$ as $w_3 << w_1$. After this differentiation the path 5 is selected, submitted to the requester and stored in the TED. Note that Path 5 depicts a Pareto-optimum as no improvement of $x_2$ or $x_3$ can be achieved without deteriorating $x_1$.

If the inter-arrival times of the requests are so short that the algorithm must minimize the processing time and thus the optimization efforts, the method could proceed as follows. In the first step 4 paths were found satisfying the condition of the most important parameter $x_1$. We either randomly select 1 path from this set and submit it to the requester or, if we still have enough time, go to the next parameter $x_2$. In this second step 3 paths were found satisfying the conditions of the first and second important parameters. Now as the priority of the next parameter x3 is far less than that of $x_1$ and $x_2$ $w_3 << w_1$ , $w_3 << w_2$, we randomly select one path from the 3 found paths and submit it to the requester, store it in TED and exit the optimization loop.

If in the first step no path can be found which can meet the optimization objective or the constraints concerning the first parameter, then it is typically decided to exit the optimization loop and to respond the request with a negation of the demand.

For finding the global optimal solution the algorithm would have to apply the sorting on all 9x3 = 27 elements of the matrix, which would scale terribly. However according to an embodiment of the invention the first $x_1$ column consisting of 9 elements is sorted first. Then after having found 4 paths, only the 4 corresponding elements concerning $x_2$ are sorted. After having found 3 paths we then sort 3 elements concerning $x_3$. Thus according to an embodiment of the invention the optimization complexity can be reduced from sorting 27 elements to sorting only 16 elements (9+4+3).

In summary embodiments of the invention provide a novel path computation method on the basis of multi-criteria optimization for computing the optimum paths according to the preferences and priorities as requested by an operator, user, SLA or the network management system. The method can be applied independently in each domain (subsystem) by its local PCE 301, 302 as well as at the system level across multiple domains by an Umbrella-PCE 303, as illustrated in figure 3. The results of the computations are stored in corresponding TED's 311, 312, 313.

An embodiment of a path computation entity is illustrated in figure 4. The path computation entity 501 comprises a preparation element 510 adapted for obtaining the plurality of paths from a TED 502, with for each path thereof values of n optimization parameters $\{P, x_1,..., x_n\}$. Further an operator 503 may input weight values $\overrightarrow{w}$ and default interval widths $\overrightarrow{\Delta}^\circ$ For the optimization parameters. The PCE further comprises a quantizing element 511 adapted for quantizing said n values in discrete bands using a quantization parameter, e.g. the interval width as defined above. The PCE 501 further comprises a first determining element 512 for computing a first set $\{P_1\}$, a second determining element 513 for computing a second set $\{P_2\}$, ..., and an nth determining element 514; and a selector 515 adapted for selecting a path from said nth set of paths $\{P_n\}$. The selected path may be stored in the TED 502 and/or delivered directly to the requestor. Those elements may be further adapted as described above.

Different classes of users may be assigned with different rights to express their connectivity demands to the network. These demands may be processed (quantized, ordered according to their weights, etc.) and integrated into the resource allocation and performance optimization algorithms. For example, a Gold user may have the right to demand a connection with a certain minimum bandwidth. In order to avoid running into massive scalability problems, embodiments of the optimization method of the invention rather aim at finding a heuristic near-optimum solution to the path computation request than a global optimum. In relaxed network conditions - that is when the algorithm has enough time to run through the whole optimization steps without being interrupted by an incoming new request - a Pareto-optimum is achieved. However, if the algorithm is forced to exit the optimization loop due to new requests only a near-optimum solution is reached.

Advantages of embodiments of the method and path computation entity of the invention are:

- a near-optimum solution to a path request may be provided by taking into account a measure for the processing load;
- unnecessary optimization cycles are reduced and the scalability is improved;
- path computation solutions can be improved iteratively, such that they either converge to a global optimum (best case) or at least to a Pareto-optimum;
- the path computation effort is further reduced by quantizing the range of the optimization parameters according to predefined configuration settings by the operator;
- possibility of integration of user preferences in the optimization process and of fulfilling the traffic contracts with best QoE via tailored resource allocation.

While the principles of the invention have been set out above in connection with specific embodiments, it is to be clearly understood that this description is merely made by way of example and not as a limitation of the scope of protection which is determined by the appended claims.

## Claims

1. Path computation entity for selecting a path amongst a plurality of paths between a first and a second network node, comprising:

   a preparation component adapted for obtaining the plurality of paths, with for each path thereof at least a first and a second value of a first and a second optimization parameter qualifying a first and second property of the path;
   a first determining component adapted for determining a first set of paths of said plurality of paths, such that each path of said first set has for the first optimization parameter a first value satisfying a first optimization objective;
   a second determining component adapted for determining a second set of paths of said first set of paths, such that each path of said second set has for the second optimization parameter a second value satisfying a second optimization objective; and
   a selector adapted for selecting a path from said second set of paths.

2. Path computation entity of claim 1, further comprising:

   a quantizing component adapted for obtaining said first and/or second values through quantizing of original first and second values of respectively the first and second optimization parameter for each path of said plurality of paths in discrete bands using a quantization parameter.

3. Path computation entity of claim 2, wherein the first determining component is further adapted for, if the determining of the first set of paths results in the number of paths of the first set of paths being lower than a first threshold or higher than a second threshold, altering the quantization parameter, obtaining new first quantized values using the altered quantization parameter, and determining a new first set of paths, each path of said new first set having a new first quantized value satisfying the first optimization objective;
   wherein the second determining component is further adapted for determining the second set of paths using the new first set, if the determining of the first set of paths results in the number of paths of the first set of paths being lower than a first threshold or higher than a second threshold.

4. Path computation entity of claim 2 or 3, wherein the second determining component is further adapted for, if the determining of the second set of paths results in the number of paths of the second set of paths being lower than a first threshold or higher than a second threshold, altering the quantization parameter, obtaining new second quantized values using the altered quantization parameter, and determining a new second set of paths, each path of said new second set having a new second quantized value satisfying the first optimization objective.

5. Path computation entity of any of the previous claims, wherein said preparation component is further adapted for receiving for each path of said plurality of paths, values of at least two optimization parameters qualifying at least two properties of a path, and at least two weight values for said at least two optimization parameters; and for defining the optimization parameter having the highest weight value as the first optimization parameter, and the optimization parameter having the second highest weight value as the second optimization parameter.

6. Path computation entity of claim 5, wherein the second determining component is further adapted to take into account the difference between the weight value of the first and the second optimization parameter when determining the second set of paths.

7. Path computation entity of any of the previous claims, wherein said first and/or second optimization parameter qualifies any one of the following properties: throughput of the path, distance of the path, time needed for sending data along the path, cost for sending data along the path.

8. Path computation entity of any of the previous claims, further comprising means for determining a measure for a processing load of the path computation entity, wherein the second determining component is further adapted to take into account this measure.

9. Method for selecting a path amongst a plurality of paths between a first and a second network node, comprising:

   - obtaining the plurality of paths, with for each path thereof at least a first and second value for a first and a second optimization parameter qualifying a first and second property of a path;
   - finding a first set of paths of said plurality of paths, each path of said first set having for the first optimization parameter a first value satisfying a first optimization objective;
   - finding a second set of paths of said first set of paths, each path of said second set having for the second optimization parameter a second value satisfying a second optimization objective; and
   - selecting a path from said second set of paths.

10. Method of claim 9, wherein said first and/or second values are obtained by quantizing original first and second values of respectively the first and second optimization parameter for each path of said plurality of paths in discrete bands using an quantization parameter.

11. Method of claim 10, wherein, if the finding of the first set of paths results in the number of paths of the first set of paths being lower than a first threshold or higher than a second threshold, the quantization parameter is altered, a plurality of new first quantized values is obtained using the altered quantization parameter, and a new first set of paths is found, each path of said new first set having a new first quantized value satisfying said first optimization objective;
   wherein the steps of obtaining a set of second quantized values and of finding a second set of paths are performed using the new first set.

12. Method of any of the previous claims 9-11, further comprising
   obtaining for each path of the plurality of paths, values for at least two optimization parameters qualifying at least two properties of a path; and at least two weight values for said at least two optimization parameters; and

selecting the optimization parameter having the highest weight value as the first optimization parameter; and the optimization parameter having the second highest weight value as the second optimization parameter.

13. Method of any of the previous claims, wherein the first and/or second optimization parameter qualifies any one of the following properties: throughput of the path, distance of the path, time needed for sending data along the path, cost for sending data along the path.

14. Method for dealing with requests for obtaining a path between a first and a second network node, comprising:

- receiving a first request for obtaining a path between a first and a second network node;
- obtaining a plurality of paths between the first and the second network node;
- performing the method of any of the previous claims;
- storing the selected path in a traffic engineering database.

15. Method of claim 14, further comprising determining a measure for the processing load, wherein, after finding the first set of paths, said measure is used to determine whether or not to perform the steps of finding a second set of paths and of selecting a path from said second set of paths, wherein, if said steps are not performed, the path is selected from the first set of paths.

FIG. 1

FIG. 2

FIG. 3

FIG. 4

FIG. 5

Europäisches
Patentamt

European
Patent Office

Office européen
des brevets

**EUROPEAN SEARCH REPORT**

Application Number

EP 11 30 6674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 259 673 B1 (YOSHIHARA KIYOHITO [JP] ET AL) 10 July 2001 (2001-07-10) * column 1, line 5 - column 7, line 26; claim 1; figures 1,2,8-11 * ----- | 1-15 | INV. H04L12/56 |
| X | US 2008/123533 A1 (VASSEUR JEAN-PHILIPPE [US] ET AL) 29 May 2008 (2008-05-29) * paragraphs [0022] - [0036]; figures 1,5,6 * ----- | 1-15 | |
| A | US 2007/280117 A1 (KATZ FABIO [CA] ET AL) 6 December 2007 (2007-12-06) * paragraphs [0035] - [0091]; figure 4 * ----- | 1-15 | |

TECHNICAL FIELDS
SEARCHED     (IPC)

H04L

The present search report has been drawn up for all claims

| Place of search | Date of completion of the search | Examiner |
|---|---|---|
| The Hague | 7 June 2012 | Engmann, Steffen |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 11 30 6674

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2012

| Patent document cited in search report | | Publication date | Patent family member(s) | | Publication date |
|---|---|---|---|---|---|
| US 6259673 | B1 | 10-07-2001 | DE | 69828664 D1 | 24-02-2005 |
| | | | DE | 69828664 T2 | 12-01-2006 |
| | | | EP | 0897253 A2 | 17-02-1999 |
| | | | JP | 3662097 B2 | 22-06-2005 |
| | | | JP | 11068838 A | 09-03-1999 |
| | | | US | 6259673 B1 | 10-07-2001 |
| US 2008123533 | A1 | 29-05-2008 | US | 2008123533 A1 | 29-05-2008 |
| | | | US | 2011286336 A1 | 24-11-2011 |
| US 2007280117 | A1 | 06-12-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 11305107 A